# EUROPEAN PATENT APPLICATION

(11) **EP 4 560 433 A1**
(43) Date of publication of application: **28.05.2025**
(21) Application number: 24211451.0
(22) Date of filing: 07.11.2024
(51) Int. Cl.: G06F 1/16, G06F 3/02, H01H 3/12, H01H 13/14

(54) **PUSH BUTTON DEVICE**

(30) Priority: 24.11.2023 JP 2023198823
(71) Applicant: CASIO COMPUTER CO., LTD., Tokyo 151-8543 (JP)
(72) Inventor: Eguchi, Hiroki, Hamura-shi, Tokyo, 205-8555 (JP)
(74) Representative: Grünecker Patent- und Rechtsanwälte PartG mbB

(57) **Abstract**

A push button device (100) includes: an operation button (212) including a pillar (212a) and a flange (212b); and a device case (1) having an opening (1C) into which the pillar (212a) of the operation button (212) is inserted. The device case (1) is provided with at least one rib (1A2) that guides the flange (212b) to a region (R) to be received therein. The rib (1A2) is provided with a first region (1A21a1, 1A22a1) configured such that as the operation button (212) moves in a press-down direction by being pressed, a gap between the flange (212b) and the rib (1A2) becomes wider, and a second region (1A21a2, 1A22a2) configured such that while the operation button (212) moves in the press-down direction by being pressed, the gap between the flange (212b) and the rib (1A2) remains uniform. The first region (1A21a1, 1A22a1) is provided closer to the opening (1C) than the second region (1A21a2, 1A22a2).

## Description

### TECHNICAL FIELD

The present disclosure relates to a push button device.

### DESCRIPTION OF RELATED ART

Electronic desktop calculators (electronic calculators) have been widely used for simple mathematical operations. In JPS 61-190630 U, there is disclosed an electronic desktop calculator in which keys are arranged and key touch is devised for quick and accurate input operations in clerical work of, for example, performing a large number of calculations.

### SUMMARY OF THE INVENTION

According to an aspect of the present disclosure, there is provided a push button device including:
an operation button including a pillar and a flange; and
a device case having an opening into which the pillar of the operation button is inserted,
wherein the device case is provided with at least one rib that guides the flange to a region to be received therein,
wherein the rib is provided with a first region configured such that as the operation button moves in a press-down direction by being pressed, a gap between the flange and the rib becomes wider, and a second region configured such that while the operation button moves in the press-down direction by being pressed, the gap between the flange and the rib remains uniform, and
wherein the first region is provided closer to the opening than the second region.

### BRIEF DESCRIPTION OF DRAWINGS

FIG. 1 is a perspective view of a scientific electronic calculator as an example of a push button device, giving its broad overview.
FIG. 2 is a block diagram showing a functional configuration of the scientific electronic calculator.
FIG. 3 is a schematic view showing the structure of a key.
FIG. 4 shows a phase at which an operation button is about to be inserted into an opening of an upper case (device case).
FIG. 5A shows a state in which the operation button is inserted in the opening of the upper case with its correct orientation.
FIG. 5B shows a state in which an attempt has been made to insert the operation button into the opening of the upper case with a wrong orientation.
FIG. 5C shows a state in which the operation button inserted in the opening of the upper case has been rotated clockwise on the paper surface.
FIG. 6A is an enlarged view of the upper left corner shown in FIG. 5A.
FIG. 6B is an enlarged view of the lower left corner shown in FIG. 5A.
FIG. 7A shows a state in which an attempt has been made to insert the operation button into the opening of the upper case with a wrong orientation.
FIG. 7B shows a state in which an attempt has been made to insert the operation button into the opening of the upper case with a wrong orientation.
FIG. 7C shows a state in which an attempt has been made to insert the operation button into the opening of the upper case with a wrong orientation.
FIG. 7D shows a state in which an attempt has been made to insert the operation button into the opening of the upper case with a wrong orientation.
FIG. 7E shows a state in which an attempt has been made to insert the operation button into the opening of the upper case with a wrong orientation.
FIG. 8A shows a state in which an attempt has been made to insert the operation button into the opening of the upper case with a wrong orientation.
FIG. 8B shows a state in which an attempt has been made to insert the operation button into the opening of the upper case with a wrong orientation.
FIG. 8C shows a state in which an attempt has been made to insert the operation button into the opening of the upper case with a wrong orientation.
FIG. 8D shows a state in which an attempt has been made to insert the operation button into the opening of the upper case with a wrong orientation.
FIG. 8E shows a state in which an attempt has been made to insert the operation button into the opening of the upper case with a wrong orientation.
FIG. 9A is an illustration to explain conventional guide ribs.
FIG. 9B shows a state of the operation button when an end of the operation button is pressed in a case where the conventional guide ribs are provided.
FIG. 9C shows a state of the operation button when an end of the operation button is pressed in a case where guide ribs of an embodiment(s) of the present disclosure are provided.
FIG. 10A shows measurement points of various dimensions of a flange and the guide ribs.
FIG. 10B is a table showing the various dimensions for a key group of type I and a key group of type II.
FIG. 11 is a lateral view of the upper case and the operation button placed with the top face of the upper case and the top face of the operation button at a placement surface side.

### DETAILED DESCRIPTION

Hereinafter, one or more embodiments of a push button device of the present disclosure will be described with reference to the drawings. Although a scientific electronic calculator will be described below as the push button device, the present disclosure is not limited to the push button device being a scientific electronic calculator, but is applicable to any push button device having an operation button inserted in an opening of a device case to be capable of being pressed (pressed down).

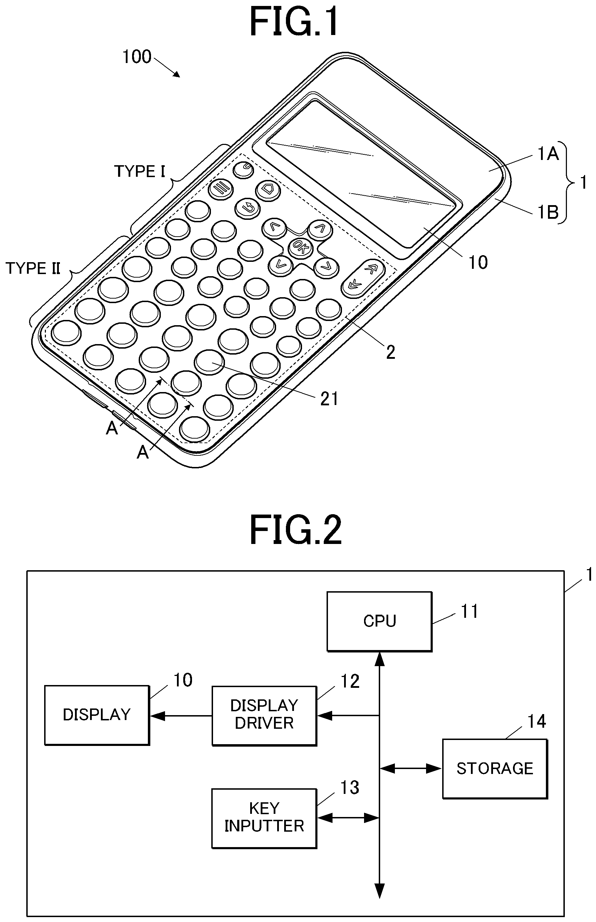

FIG. 1 is a perspective view of the scientific electronic calculator as an example of the push button device of an embodiment(s). As shown in FIG. 1, a scientific electronic calculator 100 includes an input key group 2 including key groups of various types and a display 10.

The input key group 2 is a group of keys for receiving, from a user, operations to input elements of mathematical formulae, such as numerical values and calculation symbols, and operations to issue instructions to perform various processes, and includes a plurality of keys (e.g., numeric keypad, cursor keys, AC key, CODE key, SHIFT key, etc.) to each of which a unique function is assigned.

The display 10 is composed of, for example, a liquid crystal display (LCD), and is a display that displays, using a plurality of dots, various data, such as characters, codes, symbols, mathematical formulae, results of mathematical operations and tables, which may be collectively referred to as a mathematical formula, table or the like, corresponding to operations on the input key group 2 or the like.

### [Functional Configuration]

Next, a functional configuration of the scientific electronic calculator 100 will be described. FIG. 2 is a block diagram showing a functional configuration of the scientific electronic calculator 100. As shown in FIG. 2, the scientific electronic calculator 100 includes a central processing unit (CPU) 11, a display driver 12, a key inputter 13 and a storage 14. Although not shown, in addition to these, the scientific electronic calculator 100 includes, as appropriate, a random access memory (RAM) or the like that temporarily stores data of, for example, a mathematical formula, table or the like to be displayed by/on the display 10.

The display driver 12 drives and controls the display 10 to display various types of information on itself under the control of the CPU 11. Further, the display driver 12 adjusts the contrast ratio when the display 10 performs display thereon.

The key inputter 13 includes the above-described input key group 2, and outputs key input signals corresponding to keys pressed by user operations to the CPU 11. The CPU 11 receives the key input signals corresponding to the keys pressed by the user operations, and causes the display 10 to display a mathematical formula, table or the like, performs a calculation, or performs a process among various processes, in accordance with the key input signals.

The storage 14 is a memory that stores programs and so forth. In the present embodiment, the storage 14 has various storage areas including storage areas where programs that are executed by the CPU 11 to perform various functions of the scientific electronic calculator 100 and data necessary for execution of the programs are stored.

The CPU 11 centrally controls the components of the scientific electronic calculator 100. More specifically, the CPU 11 reads a specified program(s) from a system program(s) and various application programs stored in the storage area(s) of the storage 14, loads the program to a work area of the storage 14, and in cooperation with the program loaded to the storage 14, performs a corresponding process among various processes. Further, the CPU 11 controls the display driver 12 to cause the display 10 to perform necessary display on itself.

### [Structure of Key]

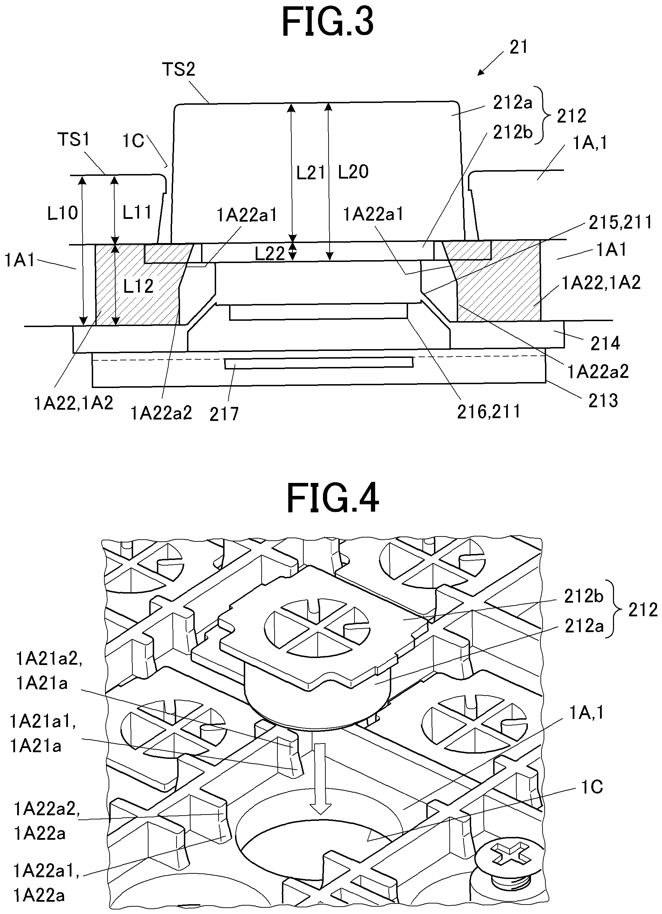

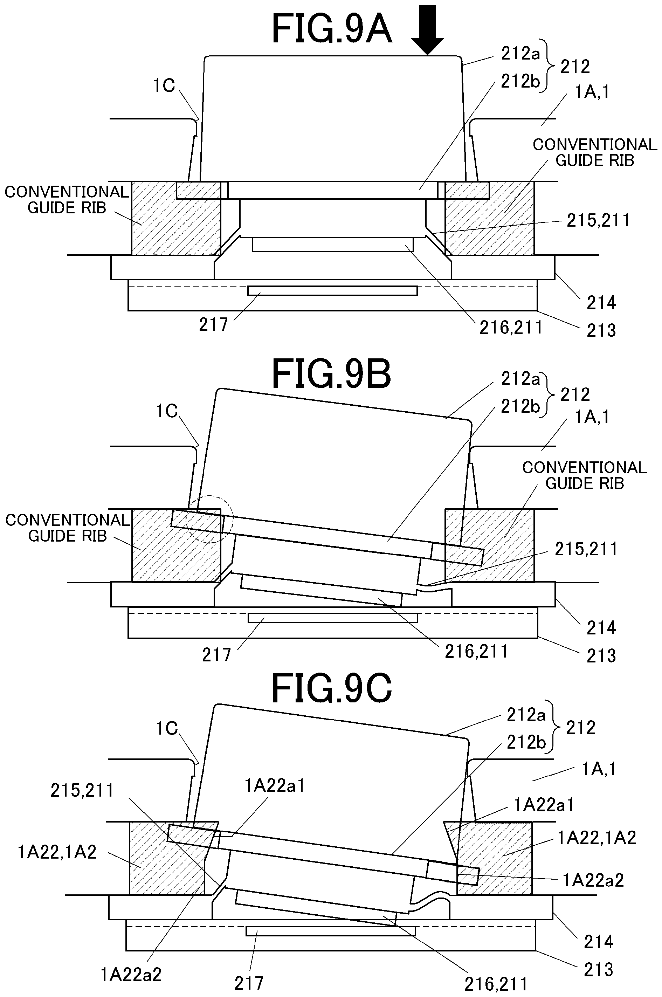

Next, the structure of a key 21 shown in FIG. 1 as a representative of the keys constituting the input key group 2 will be described. FIG. 3 is a schematic view showing the structure of the key 21. In FIG. 3 (in FIG. 9A to FIG. 10A too), in order to show a relationship between a flange 212b (described later) and a pair of second protrusions 1A22 (described later) (or a pair of conventional guide ribs), a section of the pair of second protrusions 1A22 (or the pair of conventional guide ribs) is shown. This section is a section taken along a line pointed by A, A in FIG. 1 as viewed in a direction indicated by arrows in FIG. 1.

As shown in FIG. 3, the key 21 includes an operation button 212 and a key contact member 211. The key contact member 211 is arranged in a device case 1 that is composed of an upper case 1A and a lower case 1B. The operation button 212 is disposed on the key contact member 211, and the upper part of this operation button 212 protrudes upward from an opening 1C of the device case 1 to expose.

The key contact member 211 includes a dome-shaped bulge 215 and a movable contact 216 disposed in the bulge 215. The bulge 215 is connected to a rubber sheet 214 arranged on a circuit board 213 disposed under the upper case 1A. In the present embodiment, the bulge 215 and the rubber sheet 214 are formed as one unit. The key contact member 211 is formed to correspond to a plurality of openings 1C, one of which is shown in FIG. 3, formed in the device case 1. The bulge 215 is connected to the lower part of the operation button 212 by, for example, press fitting. The movable contact 216 is made of, for example, carbon.

On the upper face of the circuit board 213, a fixed contact 217 is disposed to face the movable contact 261 to contact with and separate from the movable contact 216. Thus, the key contact member 211 is configured such that when the bulge 215 is pressed by the operation button 212, the bulge 215 elastically deforms, and the movable contact 216 comes into contact with the fixed contact 217 (shown in FIG. 9C), namely, the movable contact 216 and the fixed contact 217 are made, thereby outputting a key input signal.

As shown in FIG. 3 and FIG. 4, the operation button 212 is a member that is made of synthetic resin and includes a body 212a (pillar) and a flange 212b extending radially outward at the lower end of the body 212a. The operation button 212 is configured such that the sum L20 of the protruding amount L21 of the body 212a from the flange 212b and the thickness L22 of the flange 212b is equal to or less than the sum L10 of the depth L11 of the opening 1C (thickness of the upper case 1A) and the length L12 of a guide rib(s) 1A2 in a press-down direction in which the operation button 212 is pressed. In the present embodiment, the body 212a is cylindrical, but the shape of the body 212a is not limited thereto. The operation button 212 may be configured such that the sum L20 of the protruding amount L21 and the thickness L22 of the flange 212b is less than the sum L10 as far as it is configured such that its upper part protrudes upward from the opening 1C to expose. Each guide rib 1A2 is configured such that its length L12 is equal to or greater than the distance between the movable contact 216 and the fixed contact 217 in the press-down direction of the operation button 212. This configuration prevents, when the operation button 212 is pressed, the operation button 212 from rotating in a direction (rotational direction) of rotation with the press-down direction as the axis. FIG. 4 shows a phase at which the operation button 212 is about to be inserted into the opening 1C of the upper case 1A (device case 1). As shown in FIG. 4, an insertion direction in which the body 212a of the operation button 212 is inserted into the opening 1C (i.e., direction indicated by an arrow in the FIG. 4) is opposite to the press-down direction of the operation button 212. That is, the body 212a of the operation button 212 is inserted into the opening 1C from one end side of the body 212a, and the flange 212b is disposed at the other end side. The operation button 212 is pressed from the one end side of the body 212a.

As shown in FIG. 4 to FIG. 5C, the flange 212b is substantially quadrilateral (e.g., rectangular) in plan view, and is formed to be larger than the area of the opening 1C. As shown in FIG. 3, the flange 212b is configured such that its upper face (face closer to the body 212a) abuts the lower face (face facing the rubber sheet 214) of the upper case 1A at the edge around the opening 1C so that the flange 212b does not slip out of the opening 1C.

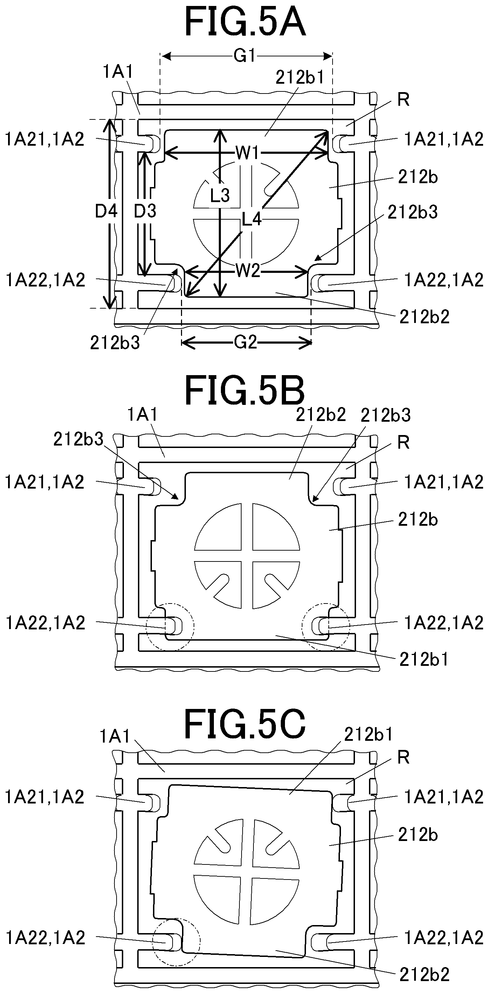

Next, the shape of the flange 212b will be described in detail with reference to FIG. 5A to FIG. 5C.

FIG. 5A shows a state in which the operation button 212 is inserted in the opening 1C of the upper case 1A with its correct orientation (orientation). FIG. 5B shows a state in which an attempt has been made to insert the operation button 212 into the opening 1C of the upper case 1A with a wrong orientation (orientation other than the above orientation). FIG. 5C shows a state in which the operation button 212 inserted in the opening 1C of the upper case 1A has been rotated clockwise on the paper surface.

As shown in FIG. 5A and described above, the flange 212b of the operation button 212 is substantially rectangular in plan view with the lower left corner and the lower right corner notched. In other words, the flange 212b is provided with notches 212b3 at positions corresponding to the paired second protrusions 1A22 described later. Therefore, the width W1 of an extension 212b1 (first extension) of the flange 212b in the left-right direction, the extension 212b1 extending upward on the paper surface, is greater than the width W2 of an extension 212b2 (second extension) of the flange 212b in the left-right direction, the extension 212b2 extending downward on the paper surface.

As shown in FIG. 5A, the lower face of the upper case 1A is provided with a frame 1A1 that demarcates a region R (region) where the flange 212b is received (accommodated). The frame 1A1 serves as a spacer for the key contact member 211 (shown in FIG. 3) to be disposed leaving a predetermined space (gap) from the flange 212b. The lower face of the upper case 1A is also provided with the guide ribs 1A2 that guide the flange 212b to the region R to be received therein. The guide ribs 1A2 are connected to the frame 1A1. In the present embodiment, the guide ribs 1A2 and the frame 1A1 are formed as one unit.

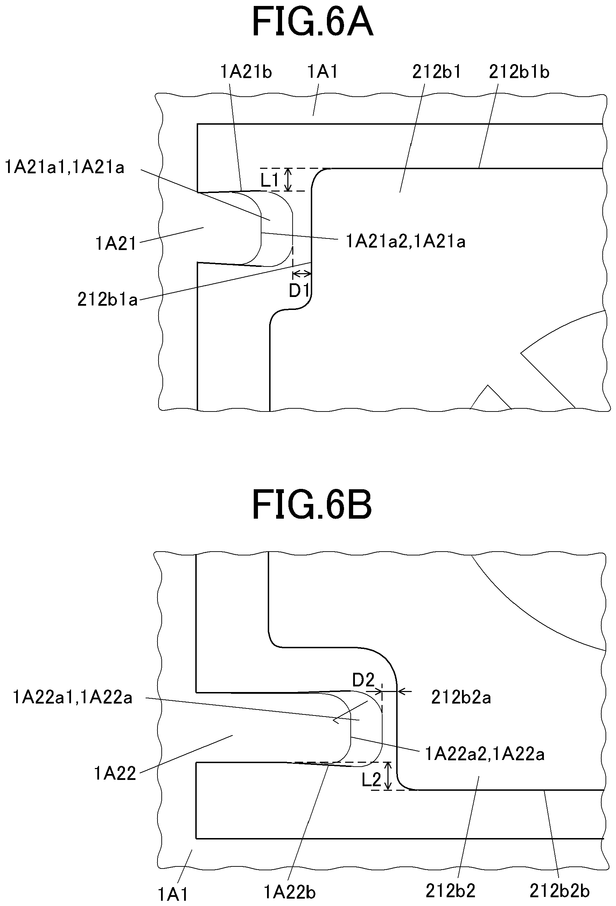

As shown in FIG. 5A, the guide ribs 1A2 are composed of paired first protrusions 1A21 at the upper left corner and the upper right corner of the region R and the abovementioned paired second protrusions 1A22 at the lower left corner and the lower right corner of the region R. In other words, the guide ribs 1A2 are composed of two pairs of protrusions facing one another, namely, a pair of first protrusions 1A21 facing one another and a pair of second protrusions 1A22 facing one another, and configured around the opening 1C. The paired first protrusions 1A21 are spaced wider than the width W1 of the first extension 212b1, so that the first extension 212b1 is sandwiched between the first protrusions 1A21 from both sides when the flange 212b is received in the region R. The paired second protrusions 1A22 are spaced wider than the width W2 of the second extension 212b2 but narrower than the width W1 of the first extension 212b1, so that the second extension 212b2 is sandwiched between the second protrusions 1A22 from both sides when the flange 212b is received in the region R. In other words, the gap G1 between paired outer faces 1A21a facing one another (shown in FIG. 6A) of the paired first protrusions 1A21 is greater than the width W1, and the gap G2 between paired outer faces 1A22a facing one another (shown in FIG. 6B) of the paired second protrusions 1A22 is greater than the width W2 but less than the width W1. In FIG. 5A, the gaps G1, G2 between the outer faces 1A21a, 1A22a at their bases are shown, but the gap G1 between the paired outer faces 1A21a is greater than the width W1 at any points of the outer faces 1A21a, and the gap G2 between the paired outer faces 1A22a is greater than the width W2 but less than the width W1 at any points of the outer faces 1A22a.

The length L3 of the flange 212b in an extending direction in which the flange 212b extends (i.e., direction perpendicular to the widths W1, W2) is longer than the distance D3 between the first protrusion(s) 1A21 and the second protrusion(s) 1A22 and also longer than the gap G2. The length L4 of a diagonal(s) of the flange 212b (straight line joining a corner of the first extension 212b1 and a corner of the second extension 212b2 facing the corner of the first extension 212b1) is designed to be longer than the width D4 of the region R in the up-down direction (i.e., the extending direction of the flange 212b), and also to be a length for the first extension 212b1 of the flange 212b to engage with (overlap) the frame 1A if an attempt is made to insert the operation button 212 into the opening 1C of the upper case 1A with a wrong orientation (orientation other than the correct orientation; e.g., clockwise from the correct orientation as a reference, with an angle of 10 degrees or greater but less than 90 degrees, an angle of greater than 90 degrees but 170 degrees or less, an angle of 190 degrees or greater but less than 270 degrees, or an angle of greater than 270 degrees but less than 350 degrees).

More specifically, the opening 1C is formed such that if an attempt is made to insert the operation button 212 into the opening 1C upside down on the paper surface of FIG. 5A (i.e., in a state in which, as viewed in the insertion direction, the body 212a is positioned in the opening 1C, and the operation button 212 faces an orientation opposite to the correct orientation), at least part of the extension 212b1 is laid on the second protrusions 1A22. In the present embodiment, the opening 1C is positioned at the center of the region R.

Thus, if an attempt is made to insert the operation button 212 into the opening 1C of the upper case 1A with a wrong orientation, for example, upside down, as shown in FIG. 5B, the first extension 212b1 of the flange 212b engages with (overlaps) the paired second protrusions 1A22, which prevents the operation button 212 from being inserted (fully inserted) into the opening 1C. The "fully inserted" in the present disclosure means that the operation button 212 is inserted into the opening 1C to the extent that the scientific electronic calculator 100 can be used as a product, not including a state in which only the tip of the body 212a is positioned in the opening 1C in the process of insertion. If the operation button 212 is inserted into the opening 1C of the upper case 1A with the correct orientation, as shown in FIG. 5A, the flange 212b does not engage with (overlap) the guide ribs 1A2.

In the present embodiment, the first protrusions 1A21 are arranged close to the first extension 212b1, and the second protrusions 1A22 are arranged close to the second extension 212b2. If the operation button 212 correctly inserted in the opening 1C of the upper case 1A is rotated to an angle (predetermined angle), as shown in FIG. 5C, the flange 212b engages (engages in the rotational direction, i.e., the direction of rotation with the press-down direction as the axis) with the later-described outer face 1A21a (first region 1A21a1 and second region 1A21a2) of a first protrusion 1A21 of the guide ribs 1A2 and the later-described outer face 1A22a (first region 1A22a1 and second region 1A22a2) of a second protrusion 1A22 of the guide ribs 1A2, which prevents the flange 212b from rotating beyond the predetermined angle. In the present embodiment, the second extension 212b2 (notches 212b3) of the flange 212b engages (engages in the rotational direction) with the pair of second protrusions 1A22, which prevents the flange 212b from rotating beyond the predetermined angle. Depending on the clearance between the body 212a and the opening 1C or manufacturing errors, the first extension 212b1 of the flange 212b may engage with the pair of first protrusions 1A21. This also prevents the flange 212b from rotating beyond the predetermined angle.

More specifically, in the state in which the operation button 212 is inserted with the correct orientation, as shown in FIG. 6A, the length L1 from an outer face 1A21b (face facing the frame 1A1) of the first protrusion 1A21 to a lateral face 212b1b (face facing the frame 1A1) of the first extension 212b1 in the extending direction is longer than the distance D1 between a lateral face 212b1a (face facing the first protrusion 1A21) of the first extension 212b1 and the outer face 1A21a. Similarly, in the state in which the operation button 212 is inserted with the correct orientation, as shown in FIG. 6B, the length L2 from an outer face 1A22b (face facing the frame 1A1) of the second protrusion 1A22 to a lateral face 212b2b (face facing the frame 1A1) of the second extension 212b2 in the extending direction is longer than the distance D2 between a lateral face 212b2a (face facing the second protrusion 1A22) of the second extension 212b2 and the outer face 1A22a. This structure prevents the flange 212b from rotating beyond the abovementioned predetermined angle. In FIG. 6A and FIG. 6B, only one of the paired first protrusions 1A21 and only one of the paired second protrusions 1A22 are shown, respectively, but the above-described distance and length between the other first protrusion 1A21 and the first extension 212b1 and the above-described distance and length between the other second protrusion 1A22 and the second extension 212b2 are the same as those shown in FIG. 6A and FIG. 6B, respectively. FIG. 6A is an enlarged view of the upper left corner shown in FIG. 5A, and FIG. 6B is an enlarged view of the lower left corner shown in FIG. 5A. The upper right corner shown in FIG. 5A and the lower right corner shown in FIG. 5A are configured in the same manner as those shown in FIG. 6A and FIG. 6B, respectively.

More specifically, when the operation button 212 shifts leftward or rightward on the paper surface of FIG. 5A, the distance between one end of the extensions 212b1, 212b2 and their corresponding guide ribs 1A2 is shorter than the distance between the other end of the extensions 212b1, 212b2 and their corresponding guide ribs 1A2, whereas when the operation button 212 shifts upward or downward on the paper surface of FIG. 5A, one of the lengths L1, L2 is longer than the other of the lengths L1, L2. This prevents the flange 212b from rotating beyond the abovementioned predetermined angle reliably. In an embodiment, the length L1 and/or the length L2 may be longer than the distance D1 and/or the distance D2 by the clearance between the body 212a and the opening 1C.

In the present embodiment, on the lower face of the upper case 1A, the frame 1A1 and the guide ribs 1A2 (first protrusions 1A21 and second protrusions 1A22) are disposed, which prevents the operation button 212 from being inserted into the opening 1C wrongly, which is not only being inserted into the opening 1C upside down as shown in FIG. 5B but also in other wrong orientations.

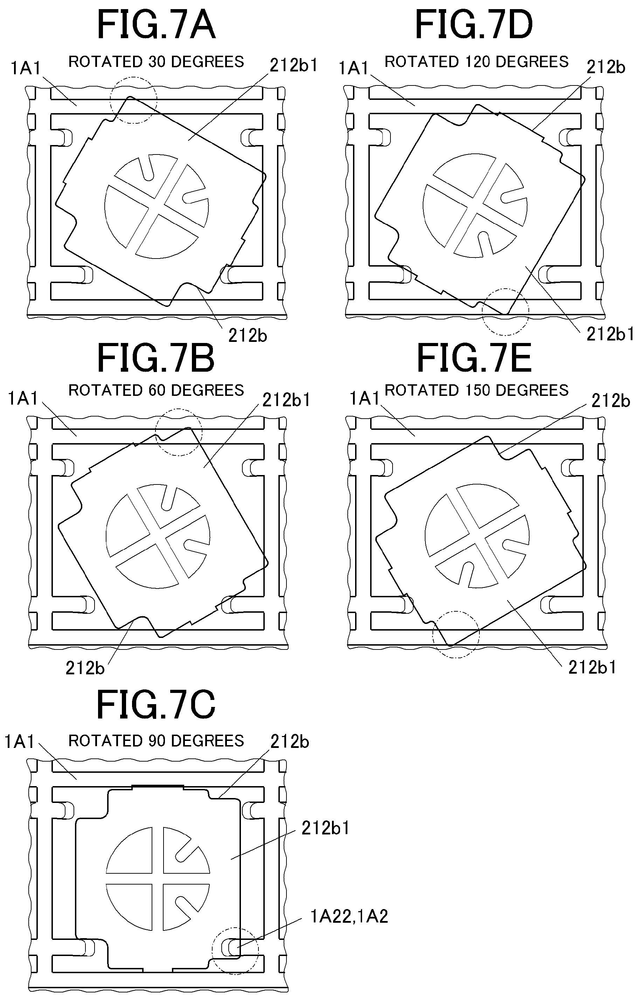

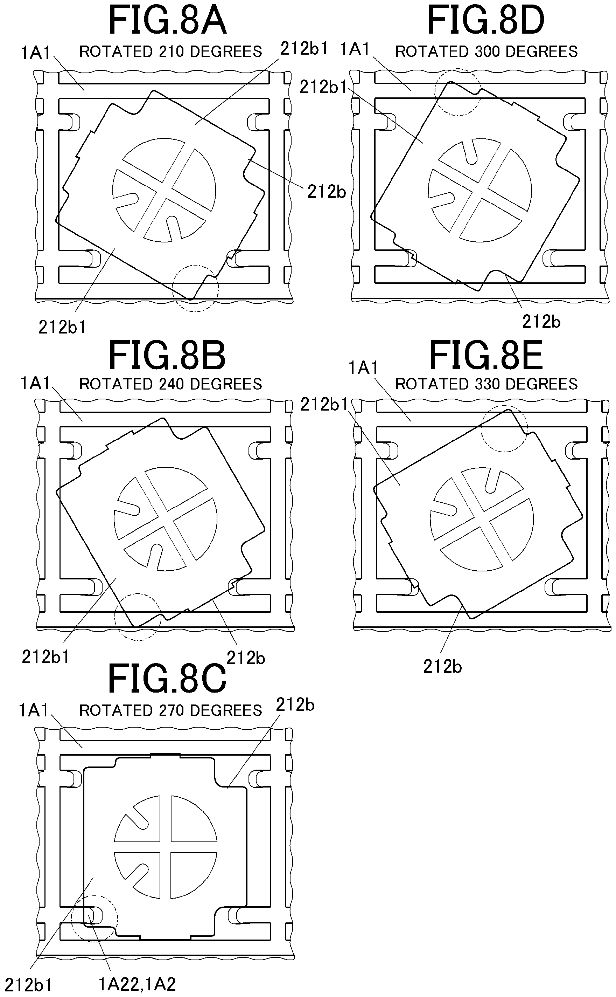

More specifically, as shown in FIG. 7A, FIG. 7B, FIG. 7D, FIG. 7E, FIG. 8A, FIG. 8B, FIG. 8D and FIG. 8E, if an attempt is made to insert the operation button 212 into the opening 1C in a state in which the operation button 212 has been rotated 30, 60, 120, 150, 210, 240, 300 or 330 degrees clockwise on the paper surface from the correct orientation (shown in FIG. 5A), since the length L4 of the diagonal of the flange 212b is the predetermined length that is longer than the width D4 of the region R in the up-down direction (i.e., the extending direction of the flange 212b) as described above, the first extension 212b1 of the flange 212b engages with (overlaps) the frame 1A1, which prevents the operation button 212 from being inserted (fully inserted) into the opening 1C. Also, as shown in FIG. 7C and FIG. 8C, if an attempt is made to insert the operation button 212 into the opening 1C in a state in which the operation button 212 has been rotated 90 or 270 degrees clockwise on the paper surface from the correct orientation (shown in FIG. 5A), since the length L3 of the flange 212b in the extending direction (i.e., the direction perpendicular to the widths W1, W2) is longer than the gap G2, and also the width W1 is longer than the distance D3, the first extension 212b1 of the flange 212b engages with (overlaps) the pair of second protrusions 1A22, which prevents the operation button 212 from being inserted (fully inserted) into the opening 1C. More specifically, the opening 1C is formed such that at least part of the first extension 212b1 overlaps the pair of second protrusions 1A22 (i.e., one of the paired second protrusions 1A22) if an attempt is made to insert the operation button 212 into the opening 1C in the state in which the operation button 212 has been rotated 90 or 270 degrees from the correct orientation (i.e., in a state in which, as viewed in the insertion direction, the body 212a is positioned in the opening 1C, and the operation button 212 is rotated 90 or 270 degrees from the correct orientation).

In the present embodiment, as described above with reference to FIG. 5C, the second extension 212b2 of the flange 212b engaging with the pair of second protrusions 1A22 prevents the flange 212b from rotating beyond the abovementioned predetermined angle, and also the first extension 212b1 of the flange 212b engaging with the pair of first protrusions 1A21 prevents the flange 212b from rotating beyond the predetermined angle. Making the width W1 of the first extension 212b1 and/or the width W2 of the second extension 212b2 as great as possible, that is, making the clearance (gap) between the first extension 212b1 and the pair of first protrusions 1A21 and/or the clearance (gap) between the second extension 212b2 and the pair of second protrusions 1A22 as small as possible, further suppresses wobble of the operation button 212.

Meanwhile, as shown in FIG. 9A, in the case of conventional guide ribs, their outer faces that may abut the flange 212b (outer faces facing the flange 212b with a gap in between) are shaped to be perpendicular to the lower face of the upper case 1A. Therefore, when an end of the operation button 212 is pressed and the operation button 21 is put in an obliquely pressed state accordingly, as shown in FIG. 9B, the first extension 212b1 and/or the second extension 212b2 (flange 212b) interfere with the guide rib(s). This causes malfunction, such as the movable contact 216 not coming into contact with the fixed contact 217 (i.e., the movable contact 216 and the fixed contact 217 being not made) or the operation button 212 not returning to its original state.

To deal with these, in the present embodiment, as shown in FIG. 3 and FIG. 4, the first and second protrusions 1A21, 1A22 are each provided with the first region 1A21a1 or 1A22a1 configured such that as the operation button 212 moves in the press-down direction by being pressed, a gap from the flange 212b becomes wider, and the second region 1A21a2 or 1A22a2 configured such that while the operation button 212 moves in the press-down direction by being pressed, the gap from the flange 212b remains uniform (unchanged). The first regions 1A21a1, 1A22a1 are provided closer to the opening 1C of the upper case 1A than the second regions 1A21a2, 1A22a2.

More specifically, regions of outer faces of the first and second protrusions 1A21, 1A22, the regions having a predetermined height from the upper ends of their respective outer faces, have a slope to be farther apart from the flange 212b in the press-down direction of the operation button 212, wherein the outer faces may abut the flange 212b. In other words, the first regions 1A21a1, 1A22a1 of the outer faces 1A21a, 1A22a close to (having a gap from) and facing the flange 212b, the first regions 1A21a1, 1A22a1 having a height being 1/2 of the length L12 (shown in FIG. 3) of the guide ribs 1A2 in the press-down direction from the base of the lower face of the upper case 1A, have a slope to be farther apart from the flange 212b in the press-down direction of the operation button 212. Meanwhile, regions other than the above-described regions of the outer faces, which may abut the flange 212b, of the first and second protrusions 1A21, 1A22 are each configured by a face perpendicular to a flat face of the upper case 1A. In other words, the second regions 1A21a2, 1A22a2 of the outer faces 1A21a, 1A22a close to (having a gap from) and facing the flange 212b are each constituted by a face perpendicular to a flat face of the upper case 1A. Therefore, even if an end of the operation button 212 is pressed and the operation button 21 is put in the obliquely pressed state accordingly, as shown in FIG. 9C, interference of the flange 212b (second extension 212b2) with the guide ribs 1A2 (pair of second protrusions 1A22) is avoided. As a result, occurrence of malfunction, such as the movable contact 216 not coming into contact with the fixed contact 217 (i.e., the movable contact 216 and the fixed contact 217 being not made) or the operation button 212 not returning to the original state, is suppressed. Further, the second regions 1A21a2, 1A22a2 are provided more distant from the opening 1C than the first regions 1A21a1, 1A22a1. This prevents the frontage of the insertion opening from which the flange 212b (operation button 212) enters and is received in the region R from being excessively large, and therefore prevents the flange 212b (operation button 212) once received in the region R from being dislodged due to impact or the like. In the present embodiment, the inner face of the opening 1C tapers (e.g., taper angle of 8° to 10°) in the insertion direction, namely, widens in the press-down direction of the operation button 212. This makes it unlikely that the operation button 212 interferes with the inner face of the opening 1C even if an end of the operation button 212 is pressed and the operation button 21 is put in the obliquely pressed state accordingly, which more effectively suppresses occurrence of malfunction, such as the operation button 212 being unable to be fully pressed or the operation button 212 not returning to the original state.

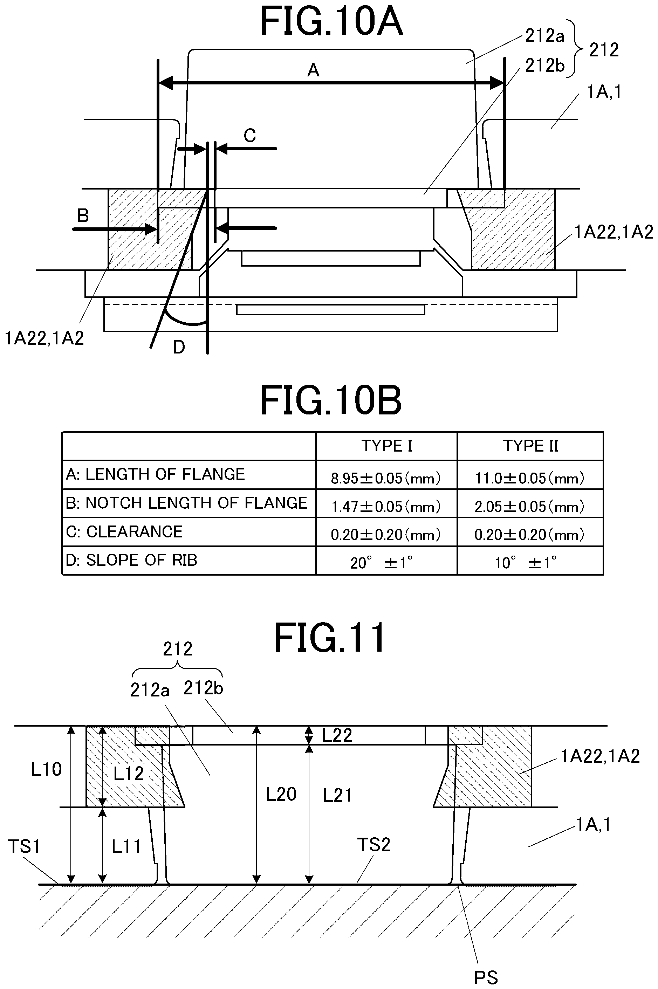

Further, in the present embodiment, as shown in FIG. 1, of the input key group 2, a key group of the upper half (type I; small keys) in FIG. 1 and a key group of the lower half (type II; large keys) in FIG. 1 are different in dimensions of the flange 212b of the operation button 212 and also different in slope of their corresponding guide ribs 1A2. More specifically, as shown in FIG. 10A and FIG. 10B, as to each key of the key group of the type I (first operation buttons), the length (A) of the flange 212b is 8.95 ± 0.05 (mm), the notch length (B) of the flange 212b is 1.47 ± 0.05 (mm), the clearance (C) between the flange 212b and each guide rib 1A2 is 0.20 ± 0.20 (mm), and the slope (D) of each guide rib 1A2 is 20° ± 1°. Meanwhile, as to each key of the key group of the type II (second operation buttons), the length (A) of the flange 212b is 11.00 ± 0.05 (mm), the notch length (B) of the flange 212b is 2.05 ± 0.05 (mm), the clearance (C) between the flange 212b and each guide rib 1A2 is 0.20 ± 0.20 (mm), and the slope (D) of each guide rib 1A2 is 10° ± 1°. That is, as to the key group of the type II (second operation buttons) having a longer length (A) of the flange 212b than the type I, the slope (D) of the guide ribs 1A2 is designed to be smaller. This is because a key having a longer length (A) of the flange 212b causes its operation button 212 to incline less when an end of the operation button 212 is pressed.

As described above, the push button device 100 of the present embodiment includes: the operation button 212 including the body 212a (pillar) and the flange 212b; and the device case 1 having the opening 1C into which the body 212a of the operation button 212 is inserted. The device case 1 is provided with at least one guide rib 1A2 that guides the flange 212b to the region R to be received therein. The guide rib 1A2 is provided with the first region 1A21a1 or 1A22a1 configured such that as the operation button 212 moves in the press-down direction by being pressed, the gap between the flange 212b and the guide rib 1A2 becomes wider, and the second region 1A21a2 or 1A22a2 configured such that while the operation button 212 moves in the press-down direction by being pressed, the gap between the flange 212b and the guide rib 1A2 remains uniform. The first region 1A21a1 or 1A22a1 is provided closer to the opening 1C than the second region 1A21a2 or 1A22a2.

According to the scientific electronic calculator 100, even if an end of the operation button 212 is pressed and the operation button 21 is put in the obliquely pressed state accordingly, the flange 212b of the operation button 212 hardly interferes with the guide ribs 1A2 (shown in FIG. 9C), which suppresses occurrence of malfunction, such as the operation button 212 being unable to be fully pressed or the operation button 212 not returning to the original state. As a result, smooth press-down operations on the operation button 212 can be made. Further, according to the scientific electronic calculator 100, the first regions 1A21a1, 1A22a1 are provided closer to the opening 1C than the second regions 1A21a2, 1A22a2. In other words, the second regions 1A21a2, 1A22a2 are provided more distant from the opening 1C than the first regions 1A21a1, 1A22a1. This prevents the frontage of the insertion portion from which the flange 212b (operation button 212) enters and is received in the region R from being excessively large, and therefore prevents the flange 212b (operation button 212) once received in the region R from being dislodged due to impact or the like.

Further, in the scientific electronic calculator 100, as shown in FIG. 3, the operation button 212 is configured such that the sum L20 of the protruding amount L21 of the body 212a from the flange 212b and the thickness L22 of the flange 212b (length of the flange 212b in the press-down direction) is equal to or less than the sum L10 of the depth L11 of the opening 1C (thickness of the upper case 1A) and the length L12 of the guide rib 1A2 in the press-down direction.

According to the scientific electronic calculator 100, as shown in FIG. 11, when the upper case 1A and the operation button 212 are placed with the top face TS1 of the upper case 1A (shown in FIG. 3) and the top face TS2 of the operation button 212 (shown in FIG. 3) at a placement surface PS side, the flange 212b does not protrude above the upper case 1A. This structure prevents the operation button 212 from rotating beyond a predetermined angle in the direction of rotation with the press-down direction of the operation button 212 as the axis, which may be caused by, for example, vibrations during the manufacturing process. Further, according to the scientific electronic calculator 100, the stroke of the operation button 212 is ensured, and also the protruding amount of the operation button 212 from the opening 1C does not become excessively large. Therefore, the scientific electronic calculator 100 in which the operation button 212 can be integrated with the device case 1 can be provided.

Further, in the scientific electronic calculator 100, the first region 1A21a1 or 1A22a1 and the second region 1A21a2 or 1A22a2 of the guide rib 1A2 are provided to engage with the flange 212b when the operation button 212 is rotated to the predetermined angle, thereby preventing the operation button 212 from rotating beyond the predetermined angle in the direction of rotation with the press-down direction as the axis.

According to the scientific electronic calculator 100, the first regions 1A21a1, 1A22a1 and the second regions 1A21a2, 1A22a2 of the guide ribs 1A2 prevent the operation button 212 from rotating beyond the predetermined angle, which suppresses wobble of the operation button 212.

Further, in the scientific electronic calculator 100, the insertion direction in which the body 212a of the operation button 212 is inserted into the opening 1C and the press-down direction are opposite directions.

According to the scientific electronic calculator 100, although the operation button 212 has the flange 212b, it can be easily combined with the device case 1 (upper case 1A).

Further, in the scientific electronic calculator 100, the body 212a of the operation button 212 is inserted into the opening 1C from one end side of the body 212a, and the flange 212b is disposed at the other end side, and the operation button 212 is pressed from the one end side.

According to the scientific electronic calculator 100, the body 212a of the operation button 212 is inserted into the opening 1C from one end side of the body 212a, and the flange 212b is disposed at the other end side, which prevents the operation button 212 from falling out of the device case 1.

Further, in the scientific electronic calculator 100, the device case 1 (upper case 1A) is provided with a plurality of guide ribs 1A2, and the guide ribs 1A2 are two pairs of guide ribs facing one another and configured around the opening 1C.

According to the scientific electronic calculator 100, two pairs of guide ribs 1A2 are configured around the opening 1C, which makes it possible to smoothly combine the operation button 212 with the device case 1.

Further, in the scientific electronic calculator 100, the flange 212b is provided with the notches 212b3 at positions corresponding to the paired second protrusions 1A22 (guide ribs 1A2), and the notches 212b3 are provided to engage with the second protrusions 1A22, thereby preventing the operation button 212 from rotating beyond the predetermined angle in the direction of rotation with the press-down direction as the axis.

According to the scientific electronic calculator 100, the notch(es) 212b3 engaging with the paired second protrusion(s) 1A22 prevents the operation button 212 from rotating beyond the predetermined angle, which suppresses wobble of the operation button 212.

Although one or more embodiments of the present disclosure have been described above, it goes without saying that the present disclosure is not limited to the above embodiments but can be modified in a variety of aspects without departing from the scope of the present disclosure.

For example, in the above embodiment (s), as shown in FIG. 5A, the flange 212b of the operation button 212 is configured such that the width W1 of the extension 212b1 (first extension) in the left-right direction, the extension 212b1 extending upward on the paper surface, is greater than the width W2 of the extension 212b2 (second extension) in the left-right direction, the extension 212b2 extending downward on the paper surface, but, for example, may be configured such that the width W1 of the extension 212b1 (first extension) extending upward on the paper surface is less than the width W2 of the extension 212b2 (second extension) extending downward on the paper surface. In this case, the pair of first protrusions 1A21 and the pair of second protrusions 1A22 in the above embodiment(s) exchange their arrangements (positions).

Further, in the above embodiment(s), the flange 212b is provided with the notches 212b3 at positions corresponding to the paired second protrusions 1A22, but may also be provided with notches at positions corresponding to the paired first protrusions 1A21.

## Claims

1. A push button device (100) comprising:
an operation button (212) including a pillar (212a) and a flange (212b); and
a device case (1) having an opening (1C) into which the pillar (212a) of the operation button (212) is inserted,
wherein the device case (1) is provided with at least one rib (1A2) that guides the flange (212b) to a region (R) to be received therein,
wherein the rib (1A2) is provided with a first region (1A21a1, 1A22a1) configured such that as the operation button (212) moves in a press-down direction by being pressed, a gap between the flange (212b) and the rib (1A2) becomes wider, and a second region (1A21a2, 1A22a2) configured such that while the operation button (212) moves in the press-down direction by being pressed, the gap between the flange (212b) and the rib (1A2) remains uniform, and
wherein the first region (1A21a1, 1A22a1) is provided closer to the opening (1C) than the second region (1A21a2, 1A22a2).

2. The push button device (100) according to claim 1, wherein a sum (L20) of a protruding amount (L21) of the pillar (212a) from the flange (212b) and a length (L22) of the flange (212b) in the press-down direction is equal to or less than a sum (L10) of a depth (L11) of the opening (1C) and a length (L12) of the rib (1A2) in the press-down direction.

3. The push button device (100) according to claim 1, wherein the first region (1A21a1, 1A22a1) and the second region (1A21a2, 1A22a2) of the rib(1A2) are provided to engage with the flange (212b) when the operation button (212) is rotated to a predetermined angle, thereby preventing the operation button (212) from rotating beyond the predetermined angle in a direction of rotation with the press-down direction as an axis.

4. The push button device (100) according to claim 1, wherein a direction in which the pillar (212a) of the operation button (212) is inserted into the opening (1C) and the press-down direction are opposite directions.

5. The push button device (100) according to claim 1,
wherein the pillar (212a) is inserted into the opening (1C) from one end side of the pillar (212a), and the flange (212b) is disposed at other end side of the pillar (212a), and
wherein the operation button (212) is pressed from the one end side.

6. The push button device (100) according to claim 1,
wherein the device case (1) is provided with a plurality of ribs (1A2) each being the rib (1A2), and
wherein the ribs (1A2) are two pairs of ribs facing one another and configured around the opening (1C).

7. The push button device (100) according to claim 6,
wherein the flange (212b) is provided with notches (212b3) at positions corresponding to at least one pair of the two pairs of ribs (1A2), and
wherein the notches (212b3) are provided to engage with the one pair of the two pairs of ribs (1A2), thereby preventing the operation button (212) from rotating beyond a predetermined angle in a direction of rotation with the press-down direction as an axis.
